Europäisches Patentamt

European Patent Office

Office européen des brevets

(11) Veröffentlichungsnummer: **0 296 447 B1**

(12) **EUROPÄISCHE PATENTSCHRIFT**

(45) Veröffentlichungstag der Patentschrift: **06.05.92**

(51) Int. Cl.5: **H02K 9/06**

(21) Anmeldenummer: **88109412.2**

(22) Anmeldetag: **14.06.88**

(54) **Lüfteranordnung für eine aussenbelüftete elektrische Maschine.**

(30) Priorität: **20.06.87 DE 3720464**

(43) Veröffentlichungstag der Anmeldung:
**28.12.88 Patentblatt 88/52**

(45) Bekanntmachung des Hinweises auf die
Patenterteilung:
**06.05.92 Patentblatt 92/19**

(84) Benannte Vertragsstaaten:
**CH DE FR GB LI NL**

(56) Entgegenhaltungen:
**DE-A- 3 207 448**
**DE-U- 1 909 065**
**DE-U- 7 813 813**
**US-A- 4 132 912**

**Lueger, Lexikon der Energietechnik, Band 6,
Seite 80 und Band 7, Seite 463**

(73) Patentinhaber: **Asea Brown Boveri Aktiengesellschaft
Kallstadter Strasse 1
W-6800 Mannheim-Käfertal(DE)**

(72) Erfinder: **Kiefaber, Joachim
Hauptstrasse 123
W-6606 Gersweiler(DE)**
Erfinder: **Hoen, Fred
Am Kirchwald 6a
W-6901 Gaiberg(DE)**
Erfinder: **Gering, Michael
Otto-Walle-Strasse 29
W-6676 Handelbachtal 3(DE)**

(74) Vertreter: **Rupprecht, Klaus, Dipl.-Ing. et al
c/o BBC Brown Boveri Aktiengesellschaft
ZPT Postfach 100351 Kallstadter Strasse 1
W-6800 Mannheim 1(DE)**

EP 0 296 447 B1

## Beschreibung

Die Erfindung bezieht sich auf eine Lüfteranordnung nach dem Oberbegriff des Anspruches 1.

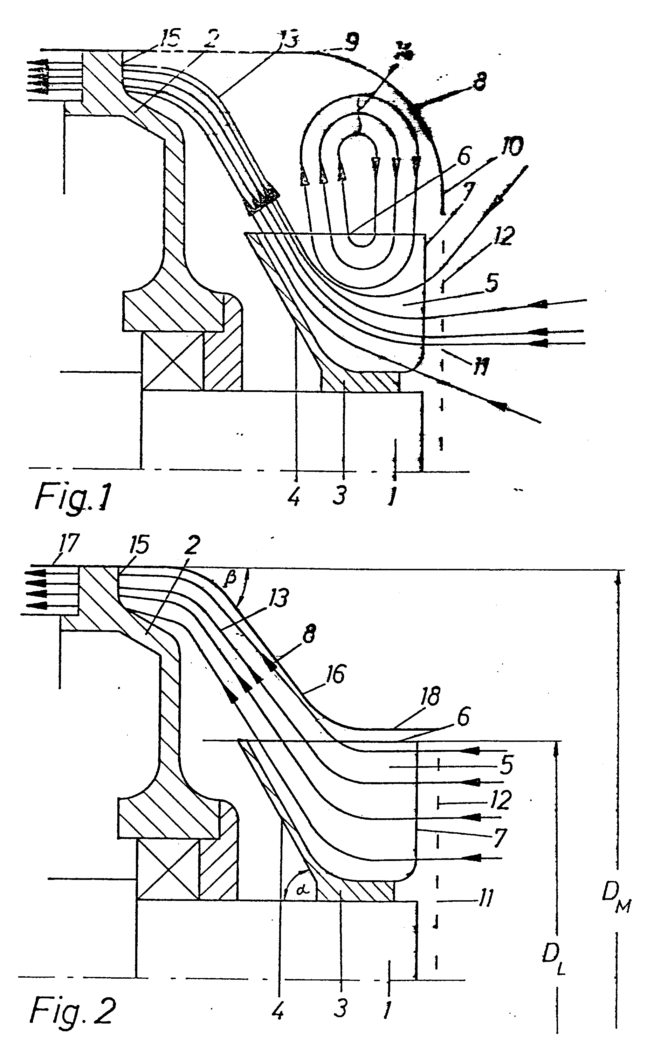

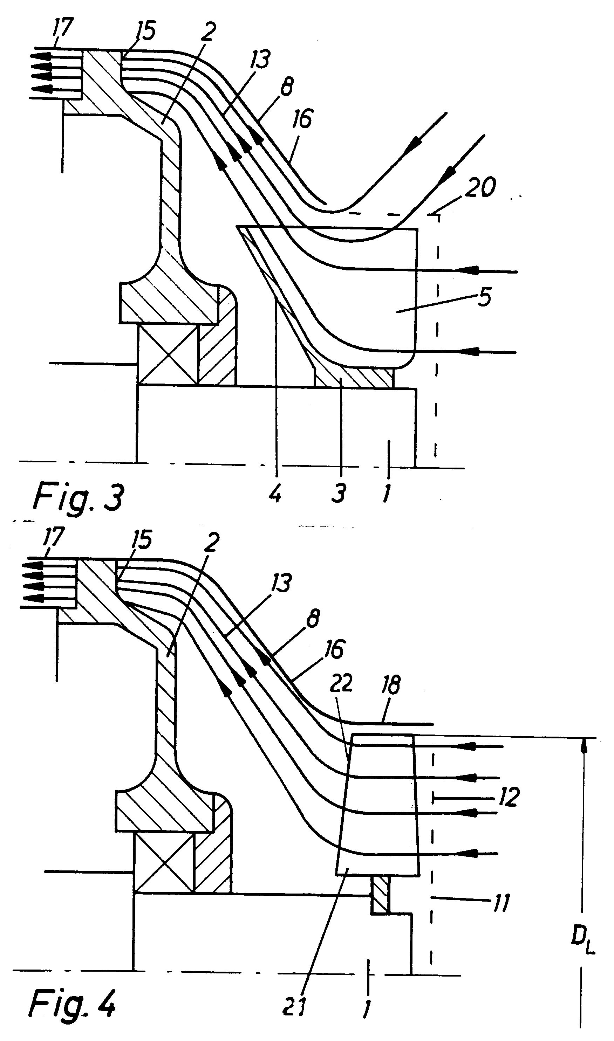

Aus der CH-PS 611 086 ist eine Lüfteranordnung mit einem großen deckscheibenlosen Lüfterrad bekannt, wobei der Lüfterraddurchmesser nahezu an den Durchmesser der Lüfterhaube bzw. der gesamten elektrischen Maschine heranreicht (vergl. dort Figur 3). Die Lüfterflügel des dabei verwendeten Lüfterrades weisen eine gekrümmte Außenkante auf, wodurch eine Anpassung an die Haubenkontur gegeben ist. Der Luftspalt zwischen Lüfterrad und Haube muß möglichst klein sein, um die Geräuschentwicklung und Leistungsverluste aufgrund einer parasitären Rückströmung niedrig zu halten. In der CH-PS 611 086 wird dargelegt, daß diese bekannte Anordnung hohen Forderungen an die Laufruhe nicht gerecht werden kann. Um relativ kleine Lüfterräder verwenden zu können, ist aus der dortigen Figur 2 eine Lösung mit feststehendem Leitapparat bekannt, wobei jedoch darauf hingewiesen wird, daß trotz aufwendiger Fertigung keine befriedigende Lösung zu erreichen ist, weil eine relativ große parasitäre RückStrömung auftritt. Um diese Nebenströmung klein zu halten, wird eine dort in Figur 1 dargestellte Lösung vorgeschlagen, die wiederum ein großes Lüfterrad vorsieht, dessen Lüfterflügel von einem mantelförmigen Leitelement umgeben und mit diesem verbunden sind. Allerdings lassen sich auch mit dieser Anordnung erhöhte Anforderungen bezüglich Geräuschminderung nicht erfüllen.

In der DE-PS 32 07 448 wird darauf hingewiesen, daß deckscheibenlose Lüfterräder entsprechend der CH 611 086 eine Anpassung der Lüfterhaube an Maschinen mit zwar gleicher Achshöhe aber unterschiedlicher Polzahl erforderlich machen. Es ist nämlich üblich, mit Rücksicht auf die Geräuschentwicklung die Lüfterräder nur so groß auszuführen, wie es bei einer gegebenen Polzahl und damit der Drehzahl im Hinblick auf eine gewünschte Lüfterleistung erforderlich ist. Um eine einheitliche Lüfterhaube für Achshöhen gleicher Maschinen unterschiedlicher Polzahl verwenden zu können, wird in der DE 32 07 448 eine Lüfterhaube mit einem zylinderförmigen Wandteil und einer geraden senkrecht zur Wellenachse ausgerichteten Stirnseite vorgeschlagen. Der Lufteinlaßdurchmesser muß allerdings in einem bestimmten Verhältnis zum Lüfterraddurchmesser stehen.

In der aus der DE 32 07 448 bekannten Haube bildet sich eine kräftige parasitäre Rückströmung aus, die den Hauptstrom durch das Lüfterrad einschnürt und somit die Lüfterleistung verringert. Außerdem verschlechtert die parasitäre Rückströmung den Wirkungsgrad und vor allem entstehen relativ hohe Lüftergeräusche.

Der DE-OS 26 49 141 sind Vorschläge zur Verwendung einer bei Radiallüfteranordnungen üblichen Haube für eine Axiallüfteranordnung zu entnehmen. Dazu wird vorgeschlagen, entweder das Axiallüfterrad mit einem Luftführungsrohr zu versehen, das als Teil des Lüfterrads mitrotiert, oder einen Einsatzteil in der Haube vorzusehen, der ebenfalls eine Führung der Zuluft bewirkt. Eine Anregung zur Verbesserung einer Radiallüfteranordnung ist der Druckschrift nicht zu entnehmen.

In dem DE-GBM 73 36 007 ist eine Radiallüfteranordnung mit einem großen Lüfterrad beschrieben und in der Zeichnung dargestellt. Die zugehörige Lüfterhaube weist einen kegelstumpfförmigen Wandteil auf, der durch ein senkrecht zur Motorwelle angeordnetes Lufteinlaßgitter abgeschlossen ist. Die Anordnung ist zwar rückströmungsarm, jedoch nicht geräuscharm. Eine Anregung zur Gestaltung der Lüfterhaube bei Verwendung eines Lüfterrades mit wesentlich kleinerem Durchmesser ist dem Gebrauchsmuster nicht zu entnehmen.

Der US 4,132,912 ist eine Lüfteranordnung mit einem Radiallüfterrad zu entnehmen, das schräge Stirnflächen und mindestens 25 Lüfterschaufeln aufweist. Das Lüfterrad ist praktisch vollständig innerhalb eines kegelstumpfförmigen Haubenteils angeordnet, der in einen glockenförmigen Ansaugteil übergeht. Mit der bekannten Anordnung soll eine bestimmte Luftführung erzwungen und eine parasitäre Rückströmung unterbunden werden. Als geräuscharme Ausführung wird die Verwendung von Lüfterrädern von 40 bis 60 Schaufeln vorgeschlagen, die jedoch in der Herstellung aufwendig sind.

Der Erfindung liegt die Aufgabe zugrunde, eine Lüfteranordnung anzugeben, die zu einer weiteren Geräuschminderung führt und trotzdem einfach herzustellen ist und nur geringe Verluste aufweist.

Diese Aufgabe wird gelöst durch eine Lüfteranordnung für eine außenbelüftete elektrische Maschine

a) mit einem auf deren Welle außerhalb des Maschinengehäuses angeordneten deckscheibenlosen Radiallüfter, der aus einem Lüfterrad mit einer Tragscheibe und mehreren Lüfterschaufeln besteht,

b) mit einer Lüfterhaube, die aufweist:

- mindestens einen ersten zylindrischen Wandteil, der mit seinem Außendurchmesser an die Maschinenkontur angepaßt ist, und

- außerdem einen kegelstumpfförmigen Wandteil, der sich mit seiner Öffnung mit dem größeren Durchmesser an den ersten zylindrischen Wandteil anschließt und

- einen Lufteinlaß, und

c) bei der im Radiallüfter ein relativ kleines Lüfterrad eingesetzt ist, wobei die Lüftertragscheibe des Lüfterrades gegen die Welle einen Öffnungswinkel Alpha im Bereich von 45° und 90° aufweist, und der Neigungswinkel Beta des kegelstumpfförmigen Wandteils gegen die Richtung der Wellenachse jeweils kleiner ist als der gewählte Öffnungswinkel Alpha, wobei

d) der kegelstumpfförmige Wandteil an den Strömungsverlauf in der Haube angepaßt ist und oberhalb der axial, etwa parallel zur Welle (1) verlaufenden Oberkante der Lüfterflügel, etwa an 25-40% der Länge dieser Oberkante - von der Lüftertragscheibe aus gemessen - endet, und

e) das Lüfterrad etwa senkrecht zur Achse verlaufende Stirnkanten der Lüfterflügel aufweist, und das Verhältnis des Lüfterraddurchmessers zum Durchmesser des ersten zylindrischen Wandteils der Lüfterhaube bei achtpoligen Maschinen etwa 0,5 beträgt und bei zweipoligen Maschinen etwa 0,3.

Vorteilhafte Ausgestaltungen sind in den Unteransprüchen angegeben und anhand von Ausführungsbeispielen beschrieben.

Mit der Erfindung wird eine Haubengestaltung vorgeschlagen, die eine Entstehung einer parasitären Rückströmung praktisch ganz verhindert. Der gesamte Schaufelkanalquerschnitt kommt zur Wirkung, wodurch die benötigte Lüfterleistung mit einem wünschenswert kleinen Lüfterrad erreicht wird. Die Lüftergeräusche sind sehr gering. Bei der erfindungsgemäßen Lösung kann vorteilhaft für achshöhengleiche Maschinen eine einheitliches Lüfterhaube verwendet werden. Diese einheitliche Lüfterhaube wird zweckmäßig für eine vierpolige Maschine optimiert. Das Lüfterrad für eine zweipolige Maschine wird zwar im Durchmesser kleiner ausgeführt, wodurch ein größerer Spalt zwischen dem zweiten zylindrischen Wandteil und den Lüfterschaufeln entsteht, der jedoch nur einen geringen Einfluß auf die Lüftereigenschaften hat.

Die Erfindung wird anhand von in der Zeichnung dargestellten Ausführungsbeispielen näher erläutert.

Es zeigt:

Fig. 1    Eine Anordnung nach dem Stand der Technik,

Fig. 2    eine erste Variante einer erfindungsgemäßen Gestaltung einer Lüfterhaube,

Fig. 3    eine zweite Variante einer erfindungsgemäßen Gestaltung einer Lüfterhaube mit haubenförmigem Abdeckgitter für den Lufteinlaß,

Fig. 4    Zeigt den Einsatz eines Axiallüfters in einer erfindungsgemäßen Lüfterhaube.

Figur 1 zeigt eine bei realisierten elektrischen Maschinen häufig anzutreffende Lüfteranordnung, die in ähnlicher Ausführung auch aus der DE 32 07 448 bekannt ist. Auf einer Maschinenwelle 1 einer geschlossenen elektrischen Maschine 2 ist ein Lüfterrad 3 angeordnet. Das Lüfterrad 3 hat eine Tragscheibe 4 für einige Lüfterflügel 5. Die Lüfterflügel 5 weisen eine gerade, etwa parallel zur Welle 1 verlaufende Oberkante 6 und eine dazu senkrechte Stirnkante 7 auf. Das Lüfterrad 3 ist abgedeckt durch eine Lüfterhaube 8 mit einem zylindrischen Wandteil 9 und einem senkrechten Wandteil 10 mit einem Lufteinlaß 11, der durch ein Gitter 12 abgedeckt ist. In dieser Anordnung bildet sich eine Hauptluftstrom 13 und ein parasitärer Rückstrom 14 auf. Der Hauptluftstrom 13 wird über Luftauslässe 15 zu nicht dargestellten Kühlrippen an der elektrischen Maschine 2 geführt. Der parasitäre Rückstrom 14 schnürt den Hauptluftstrom 13 nahezu im gesamten Strömungskanal vom Lufteinlaß 11 bis zum Luftauslaß 15 eine und verursacht somit erhebliche Verluste.

In der nachstehenden Beschreibung den übrigen Figuren sind übereinstimmende Teile in gleicher Weise bezeichnet.

Figur 2 zeigt eine erfindungsgemäße erste Variante einer Lüfteranordnung, bei der sich ein kräftiger Hauptlauftstrom 13 ausbildet und praktisch keine parasitäre Rückströmung. Dies wird erreicht durch einen kegelstumpfförmigen Wandteil 16, der sich an einen ersten zylindrischen Wandteil 17 anschließt, der an den Durchmesser $D_M$ der elektrischen Maschine 2 angepaßt ist. Der kegelstümpfförmige Wandteil 16 ist angepaßt an den nicht eingeschnürten Luftstrom 13. Es ist darauf hinzuweisen, daß eine optimale Anpassung der Haube 8 an den Verlauf der Strömung 13 erreicht wird, wenn der Neigungswinkel $\beta$ des kegelstrumfförmigen Wandteils 16 gegenüber dem ersten zylindrischen Wandteil 17 kleiner ist als der Öffnungswinkel $\alpha$ der Tragscheibe 4 gegenüber der Welle 1. Damit kann erreicht werden, daß der Kanalquerschnitt für den Luftstrom 13 etwa konstant bleibt vom Austritt aus dem Lüfterrad 3 bis zum Luftauslaß 15.

Aus strömungstechnischen Gründen wäre es optimal, wenn der kegelstumpfartige Wandteil 16 etwa 25-40% der Oberkantenlänge der Lüfterflügel 5, von der Tragscheibe 4 aus gemessen und wenig oberhalb der Oberkante 6 der Lüfterflügel 5 enden würde und der restliche Teil des Lüfterrades 3 ohne Abdeckung aus der Maschine ragen würde. Dies ist jedoch nur bei einer Schutzart ohne Berührungsschutz, z.B. bei Schutzart IPO nach DIN IEC 34 Teil 5, bzw. VDE 0530, Teil 5 zulässig. Deshalb ist in der ersten Ausführungsvariante ein geschlossener zweiter zylinsdrischer Wandteil 18 vorgesehen, der sich an den kegelförmigen Wandteil 16 anschließt und stirnseitig durch ein Gitter 12 abgedeckt ist. Der Abstand zwischen dem Gitter 12 und dem Laufrad 13 ist unkritisch und richtet sich allein nach den einschlägigen Sicherheitsvorschriften. Auch der Abstand zwischen Lüfterrad 3 und zweitem zylindrischem Wandteil 18 ist nicht seht kritisch im Hinblick auf die Lüftereigenschaften. Deshalb ist es möglich, eine einheitliche Haube 8 für achshöhengleiche Maschinen unterschiedlicher Polzahl vorzusehen, wobei man die Haube zweckmäßig für die vierpolige Maschine optimiert, wobei der Durchmesser $D_L$ des Lüfterrads 3 etwa halb so groß ist, wie der Durchmesser $D_M$ der elektrischen Maschine 2. Der Lüfterraddurchmesser $D_L$ für die zweipolige Maschine ist typisch etwa 0,3-mal Maschinendurchmesser $D_M$.

Figur 3 zeigt eine zweite erfindungsgemäße Ausführungsvariante, die bevorzugt wird, weil sie zu einer weiteren Geräuschminderung führt. Dabei kann die Luft nicht nur von der Stirnseite, sondern auch von der Seite in den Bereich des Lüfterrades einströmen, wobei jedoch die von der Seite einströmenden Luftstromteil keine parasitäre Rückströmung, sondern Teil des Hauptstromes sind. Diese zweite Variante kann realisiert werden durch eine durchbrochene Ausführung des zweiten zylindrischen Wandteils 18 oder durch Weglassen des zweiten zylindrischen Wandteiles und Aufsetzen eines haubenförmigen Gitters 20 auf den kegelstumpfförmigen Wandteil 16.

Das Lüfterrad 3 kann, wie in der Zeichnung dargestellt, auf die Welle aufgeschoben sein, kann aber auch auf die Stirnseite der Welle montiert werden. Je nach Anforderung an Festigkeit, Herstellkosten, Magnetisierbarkeit, Gewicht sowie chemischer und thermischer Beständigkeit kann die Lüfterhaube 8 aus Stahl, Nichteisenmetallen oder Kunststoff gefertigt sein.

Figur 4 zeigt, daß die für den Einsatz eines Radiallüfters gefundene optimale Haubenform gemäß Figur 2 auch sehr gut geeignet ist für den Einsatz eines Axiallüfterrades 21. Der Durchmesser $D_L$ des Axiallüfterrades 21 ist an den Durchmesser des zweiten zylindrischen Wandteils 18 der Haube angepaßt. Auch bei einer solchen Anordnung bildet sich im wesentlichen nur ein Hauptluftstrom 13 aus und eine parasitäre Rückströmung wird verhindert. Der Übergang des kegelstumpfförmigen Wandteils 16 zum zweiten zylindrischen Wandteil 18 liegt etwa im Bereich des Luftaustritts 22 aus dem Lüfterrad 21.

**Patentansprüche**

1. Lüfteranordnung für eine außenbelüftete elektrische Maschine
   a) mit einem auf deren Welle außerhalb des Maschinengehäuses angeordneten deckscheibenlosen Radiallüfter, der aus einem Lüfterrad mit einer Tragscheibe und mehreren Lüfterschaufeln besteht,
   b) mit einer Lüfterhaube, die aufweist:
   - mindestens einen ersten zylindrischen Wandteil, der mit seinem Außendurchmesser an die Maschinenkontur angepaßt ist, und
   - außerdem einen kegelstumpfförmigen Wandteil, der sich mit seiner Öffnung mit dem größeren Durchmesser an den ersten zylindrischen Wandteil anschließt und
   - einen Lufteinlaß, und
   c) bei der im Radiallüfter ein relativ kleines Lüfterrad eingesetzt ist, wobei die Lüftertragscheibe des Lüfterrades gegen die Welle einen Öffnungswinkel Alpha im Bereich von 45° und 90° aufweist, und der Neigungswinkel Beta des kegelstumpfförmigen Wandteils (16) gegen die Richtung der Wellenachse jeweils kleiner ist als der gewählte Öffnungswinkel Alpha,
   <u>dadurch gekennzeichnet, daß</u>
   d) der kegelstumpfförmige Wandteil (16) an den Strömungsverlauf in der Haube (8) angepaßt ist und oberhalb der axial, etwa parallel zur Welle (1) verlaufenden Oberkante (6) der Lüfterflügel (5), etwa an 25-40% der Länge dieser Oberkante (6) - von der Lüftertragscheibe (4) aus gemessen - endet, und
   e) das Lüfterrad (3) etwa senkrecht zur Achse verlaufende Stirnkanten (7) der Lüfterflügel (5) aufweist, und das Verhältnis des Lüfterraddurchmessers ($D_L$) zum Durchmesser ($D_M$) des ersten zylindrischen Wandteils (9) der Lüfterhaube (8) bei achtpoligen Maschinen etwa 0,5 beträgt und bei zweipoligen Maschinen etwa 0,3.

2. Lüfteranordnung nach Anspruch 1, dadurch gekennzeichnet, daß sich an die Öffnung des kegelstumpfförmigen Wandteils (16) der Haube (8) ein zweiter etwa zylindrischer Wandteil (18) mit einer geschlossenen Zylinderwand anschließt, der auf der Seite des Lufteinlasses mit einem Gitter (12) abgeschlossen ist.

3. Lüfteranordnung nach Anspruch 1, dadurch gekennzeichnet, daß sich an die Öffnung des kegelstumpfförmigen Wandteils (16) der Haube (8) ein zweiter etwa zylindrischer Wandteil (18) anschließt, der Durchbrechungen für einen Lufteinlaß aufweist und mit einem Gitter (12) abgeschlossen ist.

**Claims**

1. Fan arrangement for an externally ventilated electrical machine

a) with, located on the shaft of the electrical machine and outside the machine casing, a shroudless radial fan which consists of an impeller with an impeller disc and a plurality of fan blades,

b) with a fan cowl, which has:

- at least one first cylindrical wall part whose external diameter is matched to the machine contour, and

- in addition, a truncated cone shaped wall part whose larger diameter opening joins onto the first cylindrical wall part and

- an air inlet, and

c) in which fan arrangement a relatively small impeller is inserted in the radial fan, the impeller disc of the impeller having an included angle alpha relative to the shaft in the range between 45° and 90°, and the angle of inclination beta of the truncated cone shaped wall part (16) relative to the direction of the shaft axis being smaller in each case than the included angle alpha selected,

characterised in that

d) the truncated cone shaped wall part (16) is matched to the course of the flow in the cowl (8) and ends above the axial upper edge (6), extending approximately parallel to the shaft (1), of the fan blades (5) approximately at 25-40% of the length of this upper edge (6) - measured from the impeller disc (4) - and

e) the impeller (3) has leading edges (7) of the fan blades (5) extending approximately at right angles to the centre line, and the ratio of the impeller diameter ($D_L$) to the diameter ($D_M$) of the first cylindrical wall part (9) of the fan cowl (8) is approximately 0.5 in the case of eight-pole machines and approximately 0.3 in the case of two-pole machines.

2. Fan arrangement according to Claim 1, characterised in that a second approximately cylindrical wall part (18) joins, by means of a closed cylindrical wall, onto the opening of the truncated cone shaped wall part (16) of the cowl (8), the closed cylindrical wall being closed at the air inlet side by means of a grid (12).

3. Fan arrangement according to Claim 1, characterised in that a second approximately cylindrical wall part (18) joins onto the opening of the truncated cone shaped wall part (16) of the cowl (8), which second cylindrical wall part (18) has interruptions for an air inlet and is closed by means of a grid (12).

## Revendications

1. Agencement de ventilateur pour une machine électrique à ventilation extérieure,

a) avec un ventilateur radial sans plaque de recouvrement, agencé sur l'arbre de la machine, en dehors du carter de celle-ci, et constitué par un rotor avec un plateau porteur et plusieurs pales;

b) avec un capot de ventilateur présentant:

- au moins une première partie de paroi cylindrique qui, par son diamètre extérieur, est adoptés au contour de la machine,

- une partie de paroi tronconique qui se raccorde à la première partie de paroi cylindrique par son ouverture ayant le plus grand diamètre, et

- une entrée d'air;

c) avec un rotor relativement petit disposé dans la ventilateur radial, le plateau-support du rotor du ventilateur présentant par rapport à l'arbre un angle d'ouverture alpha dans la plage de 45° et 90°, et l'angle de pente béta de la partie de paroi tronconique (16) par rapport à la direction de l'axe de l'arbre étant à chaque fois plus petit que l'angle d'ouverture alpha choisi,

caractérisé par le fait que

d) la partie de paroi tronconique (16) est adaptée au profil de l'écoulement dans la hotte (8) et se termine au-dessus du bord supérieur (6) des pales (5) du ventilateur, aux environs de 25 à 40 % de la longueur de ce bord supérieur (6), mesurée à partir du plateau-support (4), ledit bord supérieur s'étendant axialement et sensiblement parallèlement à l'arbre (1); et

e) le rotor (3) présente des pales (5) ayant des bords frontaux (7) s'étendent sensiblement perpendiculairement à l'axe, et le rapport du diamètre du rotor ($D_L$) au diamètre ($D_M$) de la première partie de paroi cylindrique (9) de la hotte (8) du ventilateur vaut environ 0,5 dans le ces de machines octopolaires et environ 0,3 dans le ces de machines bipolaires.

2. Agencement de ventilateur selon revendication 1, caractérisé par le fait qu'à l'ouverture de la partie de paroi tronconique (16) de la hotte (8) succède une deuxième partie de paroi, sensiblement cylindrique (18), avec une paroi cylindrique fermée qui, du côté de l'entrée d'air, est fermée par une grille (12).

3. Agencement de ventilateur selon revendication 1, caractérisé par le fait qu'à l'ouverture de la partie de paroi tronconique (16) de la hotte (8) succède une deuxième partie de paroi, sensiblement cylindrique (18), qui présente des ajours pour une entrée d'air et est terminée par une grille (12).

Fig.1

Fig. 2

**Fig. 3**

**Fig. 4**